# EUROPÄISCHE PATENTSCHRIFT

(11) **EP 0 646 676 B1**
(45) Veröffentlichungstag und Bekanntmachung des Hinweises auf die Patenterteilung: **15.12.1999**
(21) Anmeldenummer: 94113707.7
(22) Anmeldetag: 01.09.1994
(51) Int. Cl.: E01H 1/04, A01B 45/00, A01G 1/12

(54) **Pflegegerät mit höhenverstellbarem Walzenträger**
Maintenance apparatus with height adjustable support for a cylindrical brush
Dispositif d'entretien avec support réglable en hauteur pour une brosse cylindrique

(30) Priorität: 01.09.1993 DE 9313169 U
(43) Veröffentlichungstag der Anmeldung: 05.04.1995
(73) Patentinhaber: WIEDENMANN GMBH, D-89192 Rammingen (DE)
(72) Erfinder:
(74) Vertreter: Flügel, Otto, Dipl.-Ing.

(56) Entgegenhaltungen:
- WO-A-86/06120
- DE-A- 3 713 445
- US-A- 3 879 786

## Beschreibung

Die Erfindung betrifft ein Pflegegerät nach dem Oberbegriff des beigefügten Anspruchs 1.

Derartige Pflegegeräte sind aus dem Stand der Technik nach der DE 3713445 A bekannt, die eine Vorrichtung zur Pflege von Grünflächen bestehend aus einem mit einer Deichsel an einem Zugfahrzeug mit Zapfwelle angehängten Fahrgestell mit Laufrädern und einem Aufnahmebehälter für gemähtes Gras, Laub oder dgl., einem in den Fahrgestellrahmen pendelnd eingehängten Pflegeaggregat mit Tasträdern und wenigstens einem walzenförmigen Pflegewerkzeug, das in Seitenschilden des Pflegeaggregates gelagert ist und an einer Seite von der Zapfwelle über einen Getriebezug angetrieben ist, offenbart. Um das Pflegewerkzeug in einfacher Weise auszuwechseln oder durch ein anderes Pflegewerkzeug zu ersetzen, ist bei dieser vorbekannten Vorrichtung vorgesehen, daß zwischen dem Fahrgestellrahmen und dem Pflegeaggregat ein Hubzylinder angeordnet ist, und daß das walzenförmige Pflegewerkzeug in den Seitenschilden lösbar aufgenommen und in gelöstem Zustand bei angehobenem Pflegeaggregat entnehmbar ist.

Bei dieser vorbekannten Vorrichtung wird das Auswechseln des bodenseitigen Pflegewerkzeuges mit Hilfe von seitlich steckbaren Achsbolzen vorgenommen, wobei der Achsbolzen als Keilelement ausgebildet ist, welches die antreibende Keilriemennabe durchgreift und in das Pflegewerkzeug eingreift. Hierdurch sind die Keilriemenscheibe und das Pflegewerkzeug verdrehfest verbunden. Diese Ausgestaltung der vorbekannten Vorrichtung hat sich insbesondere dahingehend bewährt, daß das bodenseitige Pflegewerkzeug in einfacher und schneller Weise auswechselbar ist. Hierbei ist es jedoch notwendig, daß die Vorrichtung zumindest so weit angehoben wird, daß das Pflegewerkzeug nach seiner Demontage nach vorne oder nach hinten und zur Seite aus dem Bereich des Fahrgestellrahmens herausziehbar ist. Demzufolge ist das Anhebemaß der Vorrichtung im wesentlichen durch den Durchmesser des Pflegewerkzeuges bestimmt. Darüber hinaus ist es bei der vorgenannten Vorrichtung notwendig, daß die Verbindungselemente zwischen dem Pflegewerkzeug und dem Fahrgestellrahmen, nämlich die als Keilelemente ausgebildeten Achsbolzen und die antreibende Keilriemennabe bzw. die Verbindung des Achsbolzens mit dem Pflegewerkzeug eine hohe Fertigungsgenauigkeit aufweisen, so daß über eine vorbestimmte Betriebsdauer ein einwandfreier Betrieb dieser vorbekannten Vorrichtung gewährleistet ist. Andernfalls tritt der Nachteil auf, daß bei geringeren Fertigungsgenauigkeiten zwischen den voranstehend genannten Bauelementen ein Spiel auftritt, so daß die Verbindung zwischen dem Fahrgestellrahmen und dem Pflegewerkzeug mit der Zeit ausschlägt. Hieraus resultiert ein Rattern bzw. Flattern der Riemenscheibe, was einerseits zu einer erhöhten Lärmbelästigung bei der Arbeit mit der vorbekannten Vorrichtung und andererseits zu einem hohen Wartungsaufwand dieser Vorrichtung führt. Darüber hinaus ist es bei der vorbekannten Vorrichtung erforderlich, in Anpassung an die unterschiedlichen Drehzahlen je nach Pflegewerkzeug ein Vorgetriebe vorzusehen, mit dem die Drehzahl entsprechend den Anforderungen des Pflegewerkzeuges angepaßt wird.

Aus der WO 8606120 A ist ein Pflegegerät in Form einer Straßenkehrmaschine bekannt, die mit einer Kehreinrichtung, einem Aufnahmebehälter für das Kehrgut und einer mit einem Pflegewerkzeug in Form einer Bürstenwalze versehenen Aufgabevorrichtung zum Transport des Kehrgutes von der Straße in den Aufnahmebehälter versehen ist. Während die Kehreinrichtung und der Aufnahmebehälter Teile eines für den normalen Straßenverkehr verkehrsfähigen Fahrzeuges sind, ist die das Pflegegerät aufweisende Aufgabevorrichtung eine eigenständige Einheit, die mittels Fremdkraft auf der Straße fahrbar und hierzu lösbar mit dem Kraftfahrzeug verbunden ist.

Ausgehend von dem Stand der Technik nach der DE 37 13 445 A liegt der Erfindung die **Aufgabe** zugrunde, ein gattungsgemäßes Pflegegerät zu schaffen, das konstruktiv einfach gestaltet ist, eine gute Bodenanpassung ermöglicht und in einfacher Weise an verschiedene Einsatzbedingungen anpaßbar ist.

Erfindungsgemäß ist zum Lösen dieser Aufgabe ein Pflegegerät mit den Merkmalen des beigefügten Anspruchs 1 geschaffen.

Die **Lösung** der Aufgabenstellung sieht demgemäß vor, daß das Pflegewerkzeug in einem Rahmen oder dgl. gehalten ist, der mit dem Fahrgestell derart verbindbar bzw. von diesem lösbar ist, daß die so gebildete Baueinheit unabhängig von weiteren Einrichtungen aus dem Fahrgestell herausnehmbar bzw. einschiebbar ist, wobei die Baueinheit in etwa horizontaler Richtung seitlich zur Fahrtrichtung ein- und ausbaubar an dem Fahrgestell gehalten ist.

Insgesamt ist durch diese Vorgehensweise sichergestellt, daß zum Zwecke des Auswechselns bzw. der Änderung der einzusetzenden Pflegegeräte und deren Wartung ausschließlich die Baueinheit aus jeweiligen Pflegewerkzeug und zugehörigem Rahmen aus dem Gerät bzw. dem speziellem Pflegebereich wie Kehrkopf oder dgl., herausgenommen und wieder eingesetzt werden kann, ohne daß im Zweifelsfalle besondere Vorgehensweisen wie das Aufrichten des Fahrgestelles zur Beabstandung des Pflegewerkzeuges von dem zu pflegenden Boden vorgesehen sein müssen.

Vorteilhafte Ausgestaltungen der Erfindung sind in den Unteransprüchen angegeben.

Das erfindungsgemäße Pflegegerät geht von der Vorstellung aus, nicht nur das Pflegewerkzeug bspw. die Kehrwalze, den Schlegelmäher oder die Vertikutierwalze auszuwechseln, sondern einen unteren Teilbereich eines Kehrkopfgehäuses, an dem das untere Pflegewerkzeug gehalten ist, als Baueinheit auswechselbar zu gestalten. Hierdurch kann man die Lagerung zwischen dem unteren Pflegewerkzeug und z.B. einer Keilriemenscheibe in üblicher Weise exakt und starr ausführen, so daß keine Ausschlagerscheinungen der voranstehend genannten Art auftreten können. Hierbei ist von besonderem Vorteil, wenn dem jeweiligen Pflegewerkzeug eine Keilriemenscheibe zugeordnet ist, die an die gewünschte Umdrehungszahl angepaßt ist. Somit ist es bspw. möglich, eine Kehrwalze mit einer größeren Keilriemenscheibe zu versehen, so daß die Kehrwalze mit einer vorteilhaften Umdrehungsgeschwindigkeit von 800 min⁻¹ läuft, wobei Mähgeräte eine kleinere Keilriemenscheibe haben, so daß derartige Mähgeräte mit einer Umdrehungsgeschwindigkeit von 2000 min⁻¹ betrieben werden können. Hierbei hat es sich als vorteilhaft erwiesen, daß bei der langsam umlaufenden Kehrwalze auch die zu übertragenden Drehmomente kleiner sind als bei den schnell umlaufenden Mähwalzen, wie Schlegelmäher oder Vertikutierwalze. Es kann demzufolge vorgesehen sein, daß die langsam umlaufende Kehrwalze nur zwei Keilriemenscheiben auf ihrer Achse trägt, da ein Antrieb mit nur zwei parallelen Keilriemen ausreicht, um das entsprechende Drehmoment zu übertragen. Bei den voranstehend genannten Schlegelmähern und Vertikutierwalzen sind nicht nur höhere Umdrehungsgeschwindigkeiten, sondern auch höhere Drehmomente erforderlich, weshalb man bei derartigen Pflegewerkzeugen mehrere, vorzugsweise drei Übertragungsriemen in Parallelschaltung vorsehen kann, so daß diese Pflegewerkzeuge auch über zumindest drei Keilriemenscheiben verfügen, die parallel und koaxial auf der entsprechenden Drehachse des Pflegewerkzeuges drehfest angeordnet sind.

Der Antrieb der Pflegewerkzeuge erfolgt über den Zapfwellenantrieb, der mit einem Kegelgetriebe verbunden ist, welches ausgangsseitig Keilriemenscheiben hat, deren eine beispielsweise einer oberen Kehrwalze und deren andere dem bodenseitigen Pflegewerkzeug zugeordnet ist. Diese Keilriementriebe bleiben beim Auswechseln des Pflegewerkzeuges unverändert. Es werden lediglich beim Auswechseln des Pflegewerkzeuges die zugehörigen Keilriemen in Abhängigkeit der gewünschten Umdrehungszahl aufgelegt. Dies kann bereits werkseitig ausgeführt werden. Durch diese Ausgestaltung ist das Auswechseln des Pflegewerkzeuges wesentlich vereinfacht, da lediglich der Rahmen des Pflegegerätes aus dem Fahrgestell gelöst und herausgezogen werden muß. In diesem Rahmen ist das Pflegewerkzeug zusammen mit der Keilriemenscheibe gelagert. Dieser Rahmen kann dann gegen einen anderen Rahmen getauscht werden, der beispielsweise einen Schlegelmäher oder eine Vertikutierwalze aufweist. In diesem Fall ist nach dem Einbau eines derartig ausgebildeten Rahmens nur noch ein entsprechender Keilriemen mit einer unterschiedlichen Länge aufzulegen. Auf ein vorgeschaltetes Vorgelegegetriebe, welches die entsprechenden Drehzahlen anpaßt kann demzufolge verzichtet werden.

Nach einer vorteilhaften Ausgestaltung der Erfindung ist vorgesehen, daß das Pflegeaggregat neben dem Pflegewerkzeug eine Transportwalze aufweist, die vorzugsweise als drehend angetriebene Bürste ausgebildet und zwischen dem Pflegewerkzeug und der Aufnahmevorrichtung angeordnet ist. Diese Transportwalze ist vorzugsweise ebenfalls Bestandteil des Rahmens, so daß beim Auswechseln des Pflegeaggregats sowohl das Pflegewerkzeug als auch die Transportwalze zusammen mit dem Rahmen aus dem Fahrgestell demontierbar sind. Pflegewerkzeug und Transportwalze bilden somit eine Baueinheit.

Es ist ferner bei einem erfindungsgemäßen Pflegegerät nach einem Unteranspruch vorgesehen, daß das Pflegewerkzeug und die Transportwalze über eine Antriebseinrichtung angetrieben sind, die über die Zapfwelle durch das Zugfahrzeug antreibbar ist. Hierbei kann es sich um das vorstehend bereits erwähnte Kegelgetriebe handeln, das ausgangsseitig Keilriemenscheiben trägt, wobei über zumindest eine Keilriemenscheibe die Transportwalze und über zumindest eine weitere Keilriemenscheibe das Pflegewerkzeug angetrieben wird. Hierzu ist es nach einem weiteren vorteilhaften Merkmal der Erfindung vorgesehen, daß sowohl das Pflegewerkzeug, die Transportwalze als auch die Antriebseinrichtung Riemenscheiben haben, die miteinander über zumindest einen Treibriemen verbunden sind, wobei die Drehzahl des Pflegewerkzeuges und der Transportwalze durch im Verhältnis zur Riemenscheibe der Antriebseinrichtung entsprechend dimensionierte Riemenscheiben einstellbar ist.

Die Antriebseinrichtung ist vorzugsweise fest mit dem Fahrgestell verbunden. Nach einer weiteren vorteilhaften Ausgestaltung der Erfindung ist vorgesehen, daß die Lagerung des Pflegeaggregates im Rahmen verschieblich ausgebildet ist, so daß die räumliche Zuordnung des Pflegeaggregates zur Transportwalze zueinander änderbar ist. Dieses Merkmal ist insbesondere bei Kehrwalzen als bodenseitiges Pflegewerkzeug vorteilhaft, da diese Kehrwalze einen bestimmten Abstand zu einem Prallblech haben sollen, um die Förderung des aufgenommenen Kehrgutes zur weiteren Transportwalze sicherzustellen. Dies ist beispielsweise in Anpassung an die Borstenabnutzung erforderlich. Aus fertigungstechnischen Gründen ist eine solche Einstellbarkeit aber auch bei anderen Pflegewerkzeugen wünschenswert um die Spaltbreite auch bei Schlegelmähem entsprechend optimieren zu können.

Nach einer weiteren vorteilhaften Ausgestaltung der Erfindung ist vorgesehen, daß der Rahmen und das Pflegeaggregat und/oder der Transportwalze einen Kehrkopf bilden, der um einen Schwenkpunkt verschwenkbar gelagert ist, wobei es sich als vorteilhaft herausgestellt hat, wenn der Schwenkpunkt in Arbeitsfahrtrichtung der Vorrichtung hinter den Laufrädern liegt. Der Kehrkopf ist also insoweit ein getrennt verschwenkbares Element, welches im Zusammenhang mit vorderen Stützrädern die Ausrichtung der Kehrwalze zum Boden sicherstellt, wobei noch eine Höhenverstellbarkeit vorgesehen sein kann, um Abnutzerscheinungen des Pflegewerkzeuges oder eine genaue Einstellung von Schneidwerkzeugen des Pflegewerkzeuges sicherzustellen.

Es ist darüber hinaus weiterhin vorgesehen, daß das Fahrgestell Längsträger aufweist, die derart, vorzugsweise im Querschnitt U-förmig ausgebildet sind, daß sie eine begrenzte Torsion erlauben.

Bislang hat man die Träger des Fahrgestells einer Vorrichtung bzw. des Kehrkopfes einer vorbekannten Vorrichtung zum hinteren Drehpunkt hin als Rohrprofile ausgebildet, die verhältnismäßig biegesteif sind. Die nunmehr vorgeschlagene Neuerung dahingehend, daß Längsträger verwendet werden, die eine begrenzte Torsion erlauben hat den Vorteil, daß eine Schräglage der vorderen Stützräder und damitder Walze gegenüber den Hinterrädern ermöglicht wird, die zu einer besseren Bodenanpassung, insbesondere bei Einsatz von Mähwalzen in nicht ebenen Gelände führt.

Schließlich ist es nach einer weiteren Ausgestaltung der Erfindung vorgesehen, alle Abtriebselemente vom Getriebe zu den Pflegewerkzeugen bzw. zur Transportwalze auf derselben Seite des Fahrgestells bzw. des Rahmens anzuordnen. Diese neue Ausbildung einer erfindungsgemäßen Vorrichtung rückt von der bisherigen Vorstellung ab, nämlich eine Reihenschaltung vorzusehen, daß heißt an eine Seite den Antrieb des bodenseitigen Pflegewerkzeuges und an der anderen Seite den Antrieb der Transportwalze vorzusehen. Die erfindungsgemäße Ausgestaltung der Vorrichtung mit der Anordnung aller Abtriebselemente vom Getriebe zu den Pflegewerkzeugen auf ein- und derselben Seite hat den Vorteil, daß die Wartung des Antriebs- bzw. Abtriebselemente von nur einer Seite her möglich ist, so daß beispielsweise eine Wartung auch bei eingebautem Kehrkopf problemlos möglich ist.

Ausführungsbeispiele der Erfindung ergeben sich aus der nachfolgenden Beschreibung, in der bevorzugte Ausführungsformen des erfindungsgemäßen Pflegegerätes dargestellt sind. In den Zeichnungen zeigen:
- Figur 1: eine schematisch dargestellte Seitenansicht eines Pflegegerätes mit einem Kehrkopf;
- Figur 2: eine vergrößert dargestellte Seitenansicht des Kehrkopfes des Pflegegerätes gemäß Figur 1;
- Figur 3: eine erste Ausführungsform eines Kehrkopfes mit einer Kehrwalze;
- Figur 4: eine zweite Ausführungsform eines Kehrkopfes mit einer Vertikutierwalze;
- Figur 5: eine dritte Ausführungsform eines Kehrkopfes mit einem Schlegelmäher;
- Figur 6: eine modifizierte Ausführung des Kehrkopfes, insbesondere für einen Schlegelmäher;
- Figur 7: eine schematisierte Rückansicht des unteren Bereiches der Ausführung gemäß Figur 6;
- Figur 8: eine Seitenansicht der aus Ptlegewerkzeug und Rahmen gebildeten Baueinheit.

Ein in den Figuren dargestelltes Ptlegegerät 1 besteht aus einem Fahrgestell 2, welches zumindest zwei in Fahrtrichtung parallel angeordnete Längsträger 3 aufweist, welche über eine im rechten Winkel zu den Längsträgern 3 angeordnete Achse miteinander verbunden sind. An der Achse sind beidseitig Laufräder 4 drehbar angeordnet, welche auf der zu bearbeitenden Fläche 5 aufstehen.

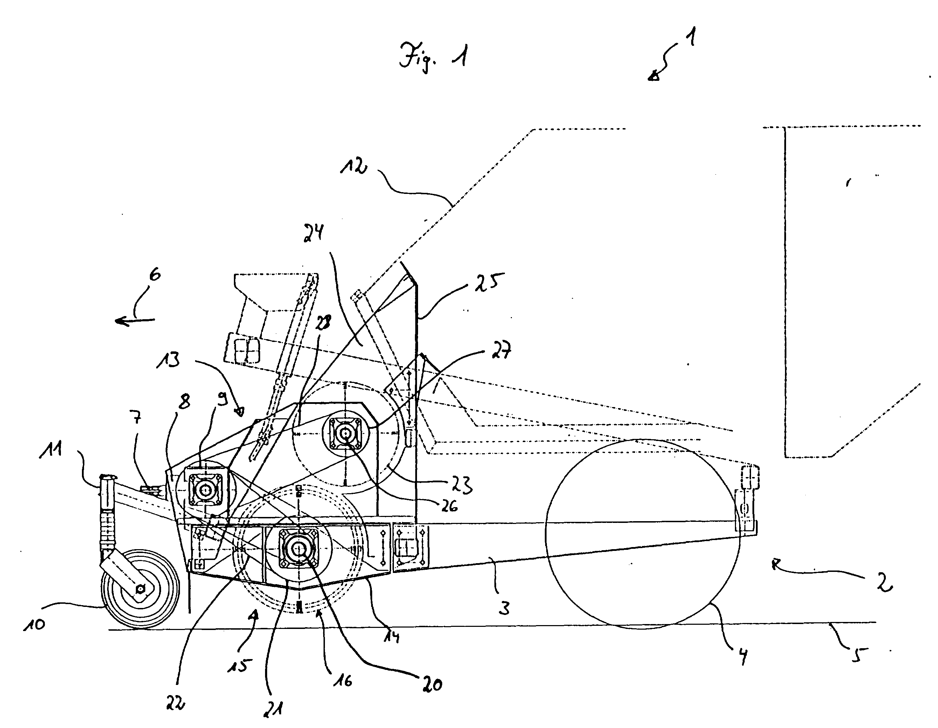

Die Fahrtrichtung des von einem nicht dargestellten Zugfahrzeuges gezogenen Pflegegerätes 1 ist in Figur 1 durch einen Pfeil 6 dargestellt, wobei hierdurch die Fahrtrichtung in Arbeitsstellung des Pflegegerätes 1 angezeigt ist. Die Verbindung des Pflegegerätes 1 mit dem nicht dargestellten Zugfahrzeug erfolgt über eine nicht dargestellte Deichsel, die am vorderen Ende, welches den Laufrädern 4 gegenüberliegt, in horizontaler Richtung schwenkbar angelenkt ist. Darüberhinaus besteht zwischen dem nicht dargestellten Zugfahrzeug und dem Ptlegegerät 1 eine Verbindung über eine nicht dargestellte Welle, die einerseits an einer Zapfwelle des Zugfahrzeuges und andererseits an einem Zapfwellenanschluß 7 des Pflegegerätes 1 derart angeordnet ist, daß das von der Zapfwelle abgegebene Drehmoment auf den Zapfwellenanschluß 7 des Ptlegegerätes 1 übertragen wird.

Der Zapfwellenanschluß 7 ist getrieblich mit einem Kegelgetriebe 8 verbunden, welches im vorderen Bereich des Fahrgestells 2 angeordnet ist und abtriebsseitig zumindest zwei Riemenscheiben 9 aufweist.

Darüberhinaus hat das Pflegegerät 1 in seinem vorderen, dem Zugfahrzeug zugewandten Bereich mindestens ein Stützrad 10, welches über eine Höhenverstellvorrichtung 11 mit dem Fahrgestell 2 fest verbunden ist. Das Stützrad 10 ist hierbei drehbar in der Höhenverstellvorrichtung 11 angeordnet, so daß es Kurvenfahrten des Pflegegerätes 1 folgen kann.

Ferner weist das Pflegegerät 1 eine Aufnahmevorrichtung 12 auf, die als Behälter ausgebildet ist und in ihrem hinteren Bereich eine nicht dargestellte Auskippöffnung hat, welche von einem ebenfalls nicht dargestellten und schwenkbeweglich angelenkten Deckel verschlossen ist. Die Aufnahmevorrichtung 12 ist vorzugsweise um einen Drehpunkt im hinteren Bereich des Fahrgestells kippbar, so daß das in die Aufnahmevorrichtung 12 geförderte Gut, nämlich beispielsweise abgemähte Ptlanzenteile, aufgekehrte Verunreinigungen, wie Laub, Müll, Sand, Splitt oder dergleichen über die hintere, mit dem Deckel verschlossene Offnung aus der Aufnahmevorrichtung 12 entfernbar sind. Hierzu wird die Aufnahmevorrichtung 12 mittels eines Linearmotors, beispielsweise eines Hydraulikzylinders um ihren hinteren Drehpunkt verschwenkt, wodurch der Deckel der Aufnahmevorrichtung 12 ebenfalls um seinen Drehpunkt verschwenkt wird und die Öffnung im hinteren Teil der Aufnahmevorrichtung 12 freigibt.

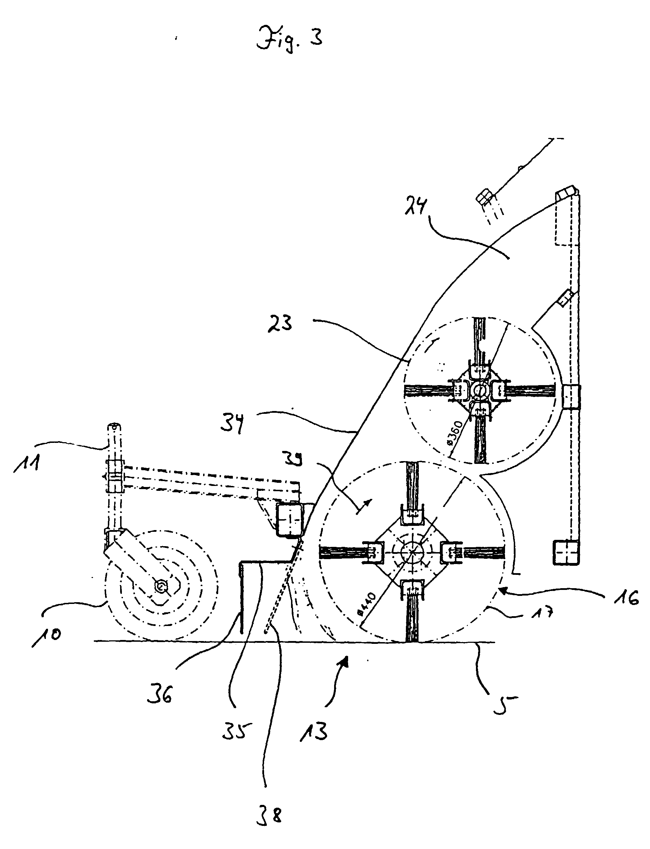

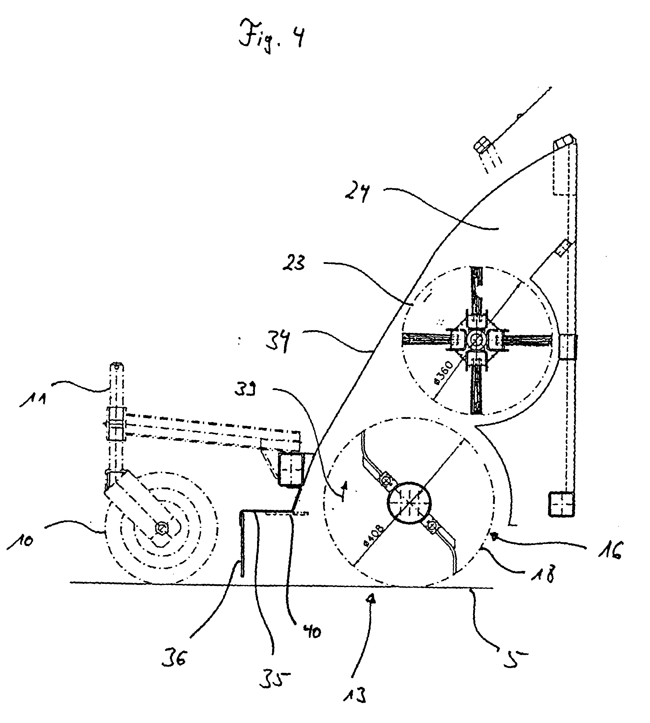

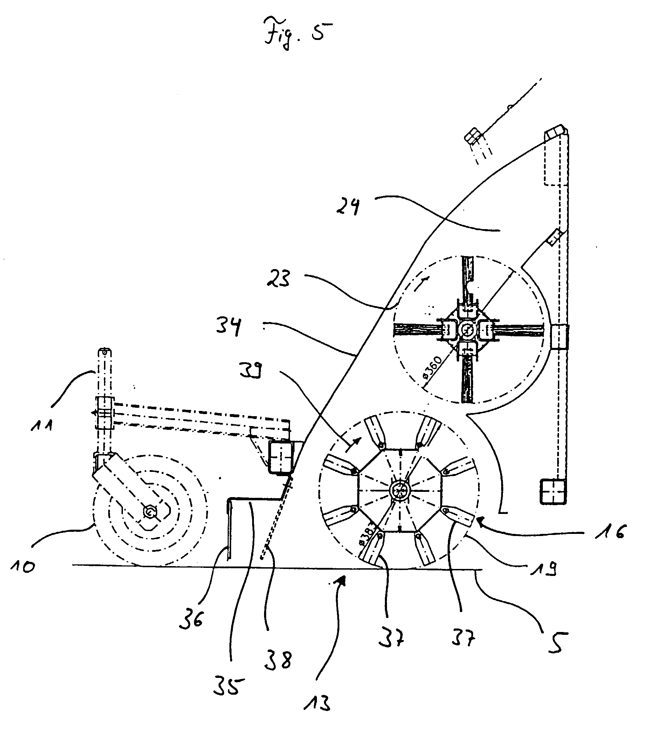

Schließlich weist das Pflegegerät 1 einen Kehrkopf 13 auf, der aus einem Rahmen 14 und einem in den Rahmen 14 eingesetzten Ptlegeaggregat 15 besteht. Das Pflegeaggregat 15 weist ein Pflegewerkzeug 16 in Form einer Kehrwalze 17 (vgl. Figur 3), einer Vertikutierwalze 18 (vgl. Figur 4) oder eines Schlegelmähers 19 (vgl. Figur 5) auf, wobei das Ptlegewerkzeug 16 in seinem Zentrum eine Achse 20 hat, auf deren einen Ende zumindest eine Riemenscheibe 21 drehfest angeordnet ist, welche getrieblich über zumindest einen Treibriemen 22 mit der Riemenscheibe 2 des Kegelgetriebes 8 verbunden ist.

Schließlich weist das Pflegeaggregat 15 eine Transportwalze 23 auf, die oberhalb des Pflegewerkzeuges 16 in einem Förderkanal 24 unmittelbar vor einer Einlaßöffnung 25 der Aufnahmevorrichtung 12 angeordnet ist. Die Transportwalze 23 weist ebenfalls eine in ihrem Zentrum angeordnete Drehachse 26 auf, die an ihrem einen Ende mit zumindest einer drehfest angeordneten Riemenscheibe 27 versehen ist, welche über einen Treibriemen 28 getrieblich mit der Riemenscheibe 9 des Kegelgetriebes 8 verbunden ist.

Somit werden über die nicht dargestellte Zapfwelle des Zugfahrzeuges sowohl das Pflegewerkzeug 16 als auch die Transportwalze 23 in gleicher Richtung drehend angetrieben. Die Übertragung des Drehmomentes der Zapfwelle und die Einstellung der erforderlichen Drehzahl des Pflegewerkzeuges 16 und der Transportwalze 23 erfolgt hierbei über das Kegelgetriebe 8, die Riemenscheibe 9, die Treibriemen 22 und 28 sowie die Riemenscheiben 21 und 27.

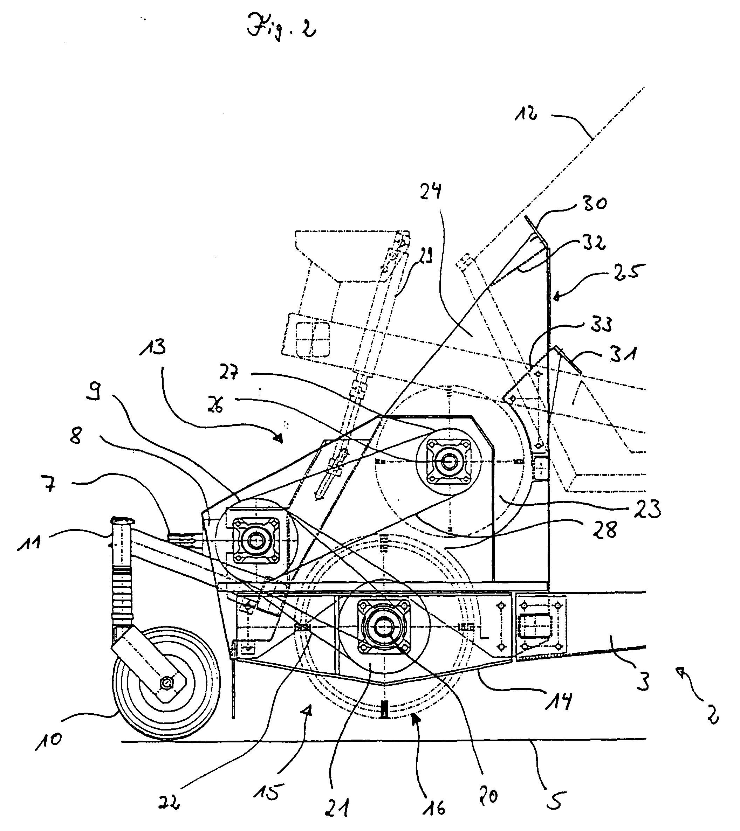

In der Figur 2 ist der Kehrkopf 3 detailliert dargestellt, so daß die getriebliche Verbindung zwischen dem Zapfwellenanschluß 7 und dem Pflegewerkzeug 16 bzw. der Transportwalze 23 deutlich erkennbar ist.

Aus der Figur 2 ist ebenfalls zu erkennen, daß der Rahmen 14 des Kehrkopfes 13 von den Längsträgern 3 getrennt ist, so daß der gesamte Kehrkopf 13 bestehend aus dem Rahmen 14 dem Pflegewerkzeug 16 und der Transportwalze 23 seitlich, das heißt in Richtung der Bildebene aus dem Fahrgestell 2 herausgezogen werden kann. Hierzu ist es lediglich notwendig, die getriebliche Verbindung zwischen der Riemenscheibe 9 und den Riemenscheiben 21 bzw. 27 zu lösen, das heißt die Treibriemen 22 und 28 von den entsprechenden Riemenscheiben 21 und 27 herunterzunehmen, woraufhin der Kehrkopf 13 nach Lösen seiner Verbindung mit dem Fahrgestell 2 herausgezogen werden kann. Durch diese Ausgestaltung ist einerseits die Wartung des Kehrkopfes 13 und insbesondere des Pflegewerkzeuges 16 wesentlich vereinfacht. Darüber hinaus kann das Pflegegerät 1 mit verschiedenen Kehrköpfen 13 ausgestattet werden, so daß beispielsweise die in den Figuren 3 bis 5 dargestellten Pflegewerkzeuge 16, nämlich der Kehrwalze 17, die Vertikutierwalze 18 oder der Schlegelmäher 19 in das Fahrgestell 2 des Pflegegerätes 1 eingesetzt werden können. Hierdurch wird ein multifunktionelles Pflegegerät 1 geschaffen, welches in einfacher und schneller Weise auf die Arbeitsanforderungen zur Pflege bestimmter Flächen 5 anpaßbar ist. Da die Kehrwalze 17 mit einer im Vergleich zur Vertikutierwalze 18 bzw. zum Schlegelmäher 19 geringeren Umdrehungszahl angetrieben wird muß die Umdrehungszahl durch bestimmte Größen der Riemenscheibe 21 angepaßt werden. Bei der Kehrwalze 17 kommt demzufolge eine Riemenscheibe 21 mit einem größeren Durchmesser zum Einsatz als bei der Vertikutierwalze 18 bzw. bei dem Schlegelmäher 19, da die Kehrwalze 17 mit nur 800 min⁻¹ umläuft, wogegen die Vertikutierwalze 18 und der Schlegelmäher 19 jeweils eine Umdrehungszahl von etwa 2000 min⁻¹ benötigen, um eine zufriedenstellende bzw. optimale Arbeitsweise zu gewährleisten. Demzufolge ist es bei dem erfindungsgemäßen Ptlegegerät 1 lediglich notwendig, den Treibriemen 22 an die entsprechende Riemenscheibe 21 des Pflegewerkzeuges 16 anzupassen. Der Treibriemen 28 zum Antrieb der Transportwalze 23 kann hierbei im wesentlichen bei allen zuvor genannten Pflegewerkzeugen 16 unverändert bleiben, da die Umdrehungszahl der Transportwalze 23 im wesentlichen unabhängig von der Umdrehungszahl des Pflegegerätes 16 bezüglich der optimalen Arbeitsweise dieses Pflegewerkzeuges 16 ist.

In den Figuren 1 und 2 ist in strichpunktierter Linienführung das eigentliche Fahrgestell 2 mit der Aufnahmevorrichtung 12 dargestellt, wogegen die ausgezogenen Linien den Kehrkopf 13 zeigen, der auswechselbar am Fahrgestell 2 befestigt ist, so daß die voranstehend geschilderten Vorteile erzielbar sind.

Es ist erkennbar, daß der Kehrkopf 13 um einen Schwenkpunkt hinter den Laufrädern 4 verschwenkbar ist. Diese Verschwenkbewegung wird durch einen Zylinder 29 bewirkt. Alternativ kann auch ein Spindelantrieb vorgesehen sein, der eine rein mechanische Verschwenkbewegung des Kehrkopfes 13 ermöglicht. Der Kehrkopf 13 ist also insoweit ein getrennt verschwenkbares Element.

Die Höhenverstellbarkeit des Kehrkopfes 13 erfolgt darüberhinaus mittels des vorderen Stützrades 10, das über die Höhenverstellvorrichtung 11 höhenverstellbar mit dem Fahrgestell 2 verbunden ist. Durch diese Höhenverstellvorrichtung 11 und das Stützrad 10 wird die Ausrichtung des Pflegewerkzeuges 16 bezüglich der zu bearbeitenden Fläche 5 eingestellt, um einerseits beispielsweise Abnutzerscheinungen der Kehrwalze 17 auszugleichen oder andererseits eine genaue Einstellung der Schneidewerkzeuge des Schlegelmähers 19 bzw, der Vertikutierwalze 18 sicherzustellen.

Insbesondere aus der Figur 2 ist zu erkennen, daß die Aufnahmevorrichtung 12 seitlich mit einem V-förmigen Ausschnitt versehen ist, der über die Achse 20 des Pflegewerkzeuges 16 geht. Durch diese Ausgestaltung kann beispielsweise das Pflegewerkzeug 16 seitlich entfernt werden, ohne daß das Fahrgestell 2 unnötig hoch angehoben werden muß.

Die Aufnahmevorrichtung 12 ist gegen rückströmendes Kleingut abgedichtet. Hierzu weist die Aufnahmevorrichtung 12 im Bereich ihrer Einlaßöffnung 25 schräg nach unten und schräg nach oben zur jeweiligen Aufnahmevorrichtungsfläche hin abragende Blenden 30 und 31 auf, die mit in den Förderkanal 24 ragenden Leitblechen 32 und 33 verbunden sind und ein im Querschnitt L-förmiges Profil bilden. In Ergänzung zu den Blenden 30 und 31 oberhalb bzw. unterhalb der Einlaßöffnung 25 sind auch seitlich in der Einlaßöffnung 25 nicht dargestellte Blenden angeordnet, die die Aufnahmevorrichtung 12 gegen rückströmendes Kleingut abdichten. Darüber hinaus ist die Aufnahmevorrichtung 12 etwas breiter ausgebildet als der Kehrkopf 13 bzw. die Einlaßöffnung 25 zum Inneren der Aufnahmevorrichtung 12.

In den Figuren 3 bis 5 sind wie bereits erwähnt verschiedene Kehrköpfe 13 dargestellt, wobei der in Figur 3 dargestellte Kehrkopf 13 die Kehrwalze 17 aufweist, welche unterhalb der Transportwalze 23 im Förderkanal 24 angeordnet ist. Der Förderkanal 24 ist unter anderem durch eine Vorderwand 34 gebildet, welche an ihrem der zu bearbeitenden Fläche 5 zugewandten Ende eine nach vorne, d.h. in Richtung des Pfeiles 6 (vgl. Figur 1) reichende Abstufung 35 aufweist, an die ein nach unten gerichteter Prallappen 36 befestigt ist. Dieser Prallappen 36 muß natürlich dem noch nicht gemähten Gras, bzw. den auf der zu bearbeitenden Fläche 5 angeordneten Verunreinigungen nachgiebig verschwenkbar ausweichen und ist daher insoweit von dem Pflegewerkzeug 16 d.h. in Figur 3 von der Kehrwalze 17, in Figur 4 von der Vertikutierwalze 18 und in Figur 5 vom Schlegelmäher 19 entfernt angeordnet. Im Falle des Schlegelmähers 19, wie er in Figur 5 dargestellt ist, wird somit erreicht, daß der Prallappen 36 nicht in den Umlaufbereich der Messer 37 des Schlegelmähers 19 gerät.

In den Figuren 3 und 5 ist darüber hinaus eine alternative Anordnung eines Prallappens 38 gestrichelt dargestellt, der im Vergleich zu den Prallappen 36 näher am Umfang des Pflegewerkzeuges 16, jedoch tangential zu diesem angeordnet ist. Dieser zurückgesetzte Prallappen 38 kann sowohl alternativ als auch zusätzlich zu dem Prallappen 36 angeordnet sein und ragt demzufolge nach vorne in Richtung des Pfeiles 6, welcher die Fahrtrichtung des Pflegegerätes 1 in Arbeitsstellung andeutet. Die in Richtung des Pfeils 39 umlaufende Kehrwalze 17 erzeugt durch ihre drehende Bewegung einen ausreichend großen Sog um auch bei dieser Anordnung des Prallappens 38 das aufgenommene Gut zur Transportwalze 23 zu fördern.

In der Figur 4, welche einen Kehrkopf 13 mit einer Vertikutierwalze 18 zeigt, ist darüber hinaus erkennbar, daß im Bereich der Abstufung 35 als zusätzliche Einrichtung ein in horizontaler Richtung verlaufendes Gegenmesser 40 vorgesehen ist, das für eine weitere Zerkleinerung des von der Vertikutierwalze 18 gemähten und hochgeworfenen Gutes sorgt.

Die Lagerung des Pflegeaggregates 15 im Rahmen 14 ist verschieblich ausgebildet, so daß die räumliche Zuordnung des Pflegewerkzeuges 16 zur Transportwalze 23 veränderbar ist. Diese Ausgestaltung ist insbesondere bei Verwendung einer Kehrwalze 17 als Pflegewerkzeug 16 von Vorteil, da die Kehrwalze 17 zum Prallappen 36 einen bestimmten Abstand haben soll, um die Förderung des aufgenommenen Gutes zur weiteren Transportwalze 23 hin sicherzustellen. Dies ist beispielsweise in Anpassung an die Borstenabnutzung erforderlich. Darüber hinaus ist eine Einstellbarkeit aber auch dahingehend wünschenswert, um die Spaltbreite zwischen den Messern 37 des Schlegelmähers 19 zum Prallappen 38 optimieren zu können.

Ferner ist bei dem erfindungsgemäßen Pflegegerät 1 vorgesehen, daß die Längsträger 3 im Querschnitt U-förmig ausgebildet sind, um eine begrenzte Torsion der Längsträger 3 zu erlauben, so daß eine Schräglage der vorderen Stützräder 10 und damit des Pflegewerkzeuges 16 ermöglicht wird. Hierdurch wird eine bessere Bodenanpassung des Pflegewerkzeuges 16, insbesondere beim Einsatz einer Kehrwalze 17 in nicht ebenem Gelände erzielt.

Schließlich ist insbesondere aus den Figuren 1 und 2 zu erkennen, daß alle An- bzw. Abtriebselemente vom Kegelgetriebe 8 zu dem Pflegewerkzeug 16 bzw. zu der Transportwalze 23 auf ein- und derselben Seite des Fahrgestells 2 bzw. des Rahmens 14 angeordnet sind, so daß diese An- bzw. Abtriebselemente in einfacher Weise auch dann zugänglich sind, wenn der Kehrkopf 13 in dem Fahrgestell 2 montiert ist.

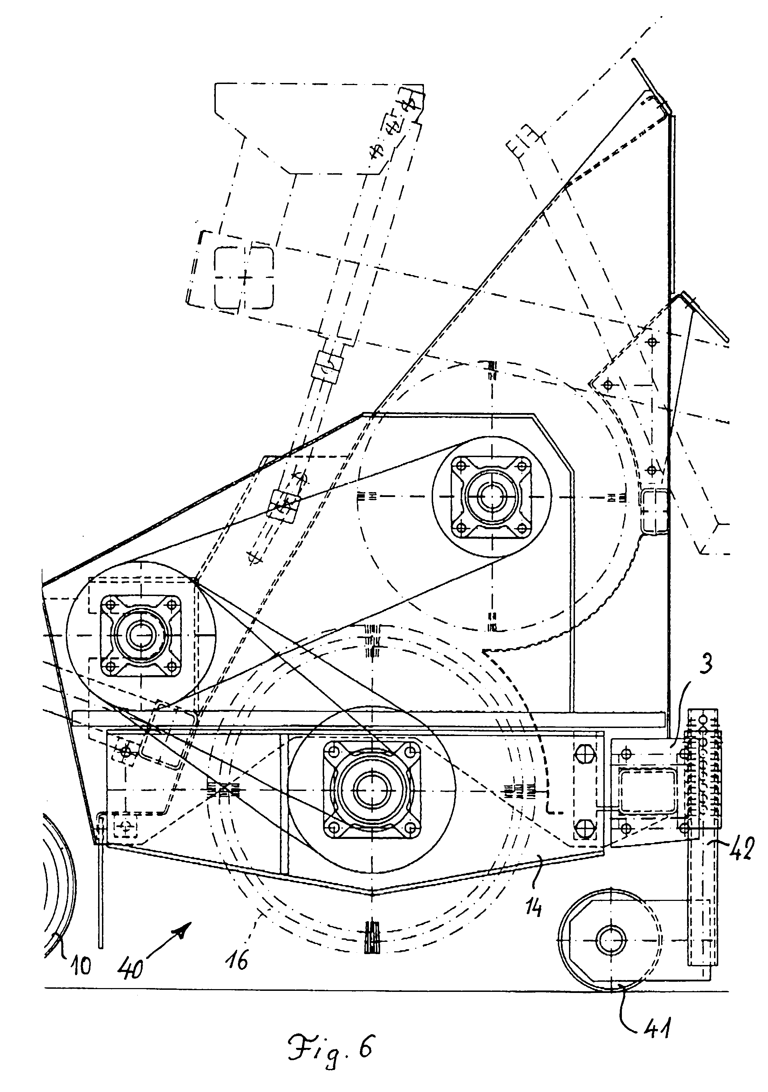

Figur 6 zeigt vergrößert einen Ausschnitt der Seitenansichten insbesondere der Beispiele der Figuren 1 und 2 mit einer Abstützung, die im Nahbereich des Pflegewerkzeuges 16 angeordnet ist, und zwar in Längsrichtung des fahrbaren Gerätes gesehen an der den Stützrädern 10 abgewandten Seite des Pflegewerkzeuges. Diese Abstützung besteht aus einer Walze 41 die mittels einer Höhenverstelleinrichtung 42 - im Ausführungsbeispiel stufenweise einstellbar symbolisiert - an dem Fahrgestell 2 bzw. dessen Längsträgern 3 gehalten ist.

Eine solche Abstützung ist dann angeraten, wenn es auf eine genaue Beabstandung des Pflegewerkzeuges bzw. dessen Umfang an den zu bearbeitenden Boden ankommt, wie dies insbesondere bei einer Ausbildung des Pflegewerkzeuges als Schlegelmäher der Fall ist. Um diese Beabstandung nicht durch auftragende Verschmutzungen der Mantelfläche der Abstützwalze 41 zu beeinträchtigen, ist diese selbstreinigend ausgebildet, d.h. an ihrer Mantelfläche greift eine nicht dargestellte Abstreifvorrichtung an, die an der Mantelfläche haftende Verschmutzungen entfernt.

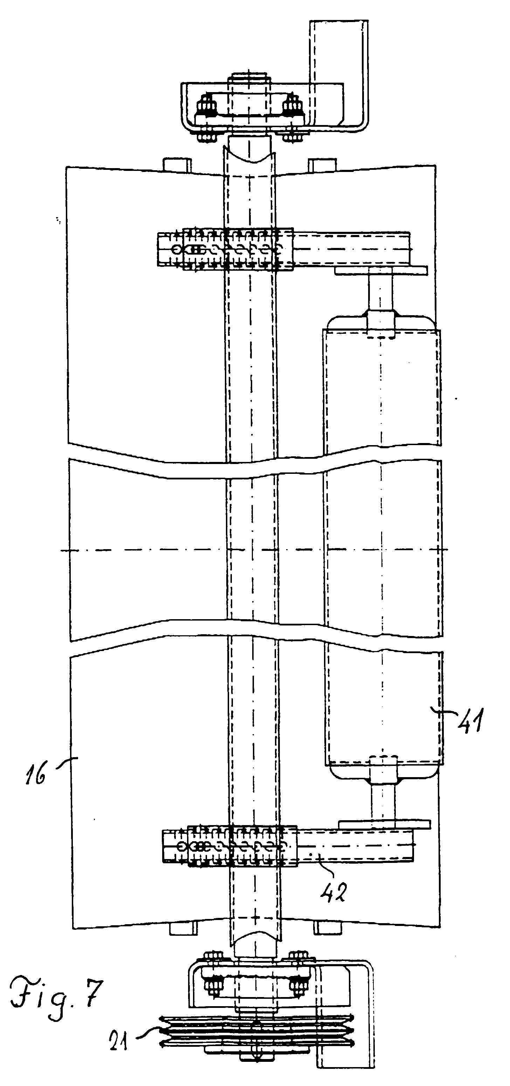

Figur 7 zeigt eine Rückansicht der mit der Abstützung versehenen bodenseitigen Pflegewerkzeuganordnung in schematisierter Darstellung, woraus die mittels der Höhenverstellung 42 verstellbare Abstützwalze 41 als sich über den Großteil der Breite des Pflegegerätes erstreckend ersichtlich ist. Dabei ist das Kehrwerkzeug 16 hinsichtlich seiner über die Riemenscheibe 21 angetriebenen Achse und umrisshaft schematisch hinsichtlich seiner Arbeitsmantelfläche angedeutet.

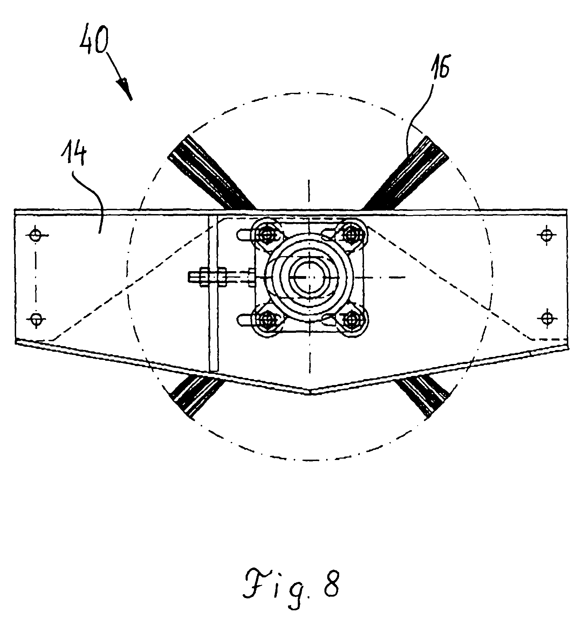

Figur 8 soll ganz deutlich machen, was als Baueinheit 40 von allen übrigen Einrichtungen getrennt aus dem Pflegegerät 1 herausnehmbar bzw. in dieses einsetzbar ist, und zwar mit einem Träger 14 in den unterschiedlich gestaltete Pflegewerkzeuge 16 einsetzbar sind. Vorzugsweise werden die unterschiedlichen Pflegewerkzeuge 16 jeweils mit ihren Trägern 14 vorbereitet zur Verfügung gestellt. Damit sind Arbeiten, die mit der Drehlagerung der Pflegegeräte verbunden sind, vermieden. Es ist lediglich erforderlich, die jeweilige Baueinheit, nämlich Träger plus Kehrwalze, Träger plus Schlegelmäher, Träger plus Vertikutierwalze etc. in das Pflegegerät einzusetzen, und zwar - wie in den Ausführungsbeispielen wiedergegeben - in einen sogenannten Kehrkopf, der eine oberhalb des Pflegewerkzeuges angeordnete Transportwalze aufweist, die das Kehrgut, das Mähgut oder die beim Vertikutieren anfallenden Rückstände aufnimmt und in die dafür vorgesehene Aufnahmevorrichtung überführt. Diese Transportwalze nebst Kehrkopf und dergleichen bleibt also beim Auswechseln einer Baueinheit aus Pflegewerkzeug und Träger immer an Ort und Stelle.

## Patentansprüche

1. Pflegegerät (1) zur Unterhaltung von im wesentlichen ebenen Flächen (5), vorzugsweise im kommunalen, privaten oder gewerblichen Bereich, wie Grünflächen, befestigten Flächen oder dergleichen, mit einem über eine Deichsel an einem Zugfahrzeug mit Zapfwelle, beispielsweise einem Schlepper oder dergleichen anhängbaren Fahrgestell (2), welches zumindest eine Achse mit zumindest zwei Laufrädern (4) aufweist, einer an dem Fahrgestell (2) befestigten Aufnahmevorrichtung (12) für von der zu unterhaltenden Fläche (5) aufgenommenes Gut, wie beispielsweise abgemähte Pflanzenteile, aufgekehrte Verunreinigungen, wie Laub, Müll, Sand, Splitt oder dergleichen, und mit einem am Fahrgestell (2) angeordneten Pflegeaggregat (15), welches zumindest ein drehend angetriebenes Pflegewerkzeug (16; 17, 18, 19), wie ein Schlegelmäher (19), eine Kehrwalze (17) und/oder eine Vertikutierwalze (18) oder dergleichen aufweist,
**dadurch gekennzeichnet,**
daß das Pflegewerkzeug (16; 17, 18, 19) einen Rahmen (14) oder dergleichen aufweist, der mit dem Fahrgestell (2) derart verbindbar bzw. von diesem lösbar ist, daß die so gebildete Baueinheit (40) unabhängig von weiteren Einrichtungen aus dem Fahrgestell (2) herausnehmbar bzw. einschiebbar ist, und daß die Baueinheit (40) in etwa horizontaler Richtung seitlich zur Fahrtrichtung (6) ein- und ausbaubar an dem Fahrgestell (2) gehalten ist.

2. Pflegegerät nach Anspruch 1,
**dadurch gekennzeichnet,**
daß dem Pflegewerkzeug (16; 17, 18, 19) eine Transportwalze (23) zugeordnet ist, die vorzugsweise als drehend angetriebene Bürste ausgebildet und zwischen dem Pflegewerkzeug (16; 17, 18, 19) und der Aufnahmevorrichtung (12) angeordnet ist.

3. Pflegegerät nach Anspruch 2,
**dadurch gekennzeichnet,**
daß das Pflegewerkzeug (16; 17, 18, 19) und die Transportwalze (23) über eine Antriebseinrichtung (8, 9) angetrieben sind, die über die Zapfwelle durch das Zugfahrzeug antreibbar ist.

4. Pflegegerät nach Anspruch 3,
**dadurch gekennzeichnet,**
daß sowohl das Pflegewerkzeug (16; 17, 18, 19), die Transportwalze (23) als auch die Antriebseinrichtung (8, 9) Riemenscheiben (9, 21, 27) haben, die miteinander über zumindest einen Treibriemen (22, 28) verbunden sind, wobei die Drehzahl des Pflegewerkzeuges (16; 17, 18, 19) und der Transportwalze (23) durch im Verhältnis zur Riemenscheibe (9) der Antriebseinrichtung (8, 9) entsprechend dimensionierte Riemenscheiben (21, 27) einstellbar ist.

5. Pflegegerät nach Anspruch 3 oder 4,
**dadurch gekennzeichnet,**
daß die Antriebseinrichtung (8, 9) fest mit dem Fahrgestell (2) verbunden ist.

6. Pflegegerät nach einem der Ansprüche 2 bis 5,
**dadurch gekennzeichnet,**
daß die Lagerung des Pflegewerkzeuges (16; 17, 18, 19) im Rahmen (14) verschieblich ausgebildet ist, so daß die räumliche Zuordnung des Pflegewerkzeuges (16; 17, 18, 19) zur Transportwalze (23) zueinander änderbar ist.

7. Pflegegerät nach einem der Ansprüche 2 bis 6,
**dadurch gekennzeichnet,**
daß der Rahmen (14) mit dem Pflegewerkzeug (16; 17, 18, 19) und der Transportwalze (23) einen Kehrkopf (13) bilden, der um einen Schwenkpunkt verschwenkbar gelagert ist.

8. Pflegegerät nach Anspruch 7,
**dadurch gekennzeichnet,**
daß der Schwenkpunkt in Arbeitsfahrtrichtung (6) hinter den Laufrädern (4) liegt.

9. Pflegegerät nach einem der Ansprüche 1 bis 8,
**dadurch gekennzeichnet,**
daß das Fahrgestell (2) Längsträger (3) aufweist, die derart - vorzugsweise im Querschnitt U-förmig - ausgebildet sind, daß sie eine begrenzte Torsion erlauben.

10. Pflegegerät nach einem der Ansprüche 1 bis 9,
**dadurch gekennzeichnet,**
daß alle An- bzw. Abtriebselemente (9, 22, 21) vom Getriebe (8) zu den Pflegewerkzeugen (16; 17, 18, 19) auf derselben Seite des Fahrgestells (2) bzw. des Rahmens (14) angeordnet sind.

11. Pflegegerät nach einem der Ansprüche 1 bis 10,
**dadurch gekennzeichnet,**
daß an dem Fahrgestell (2) im Nachbarbereich des Pflegewerkzeuges (16; 17, 18, 19) eine für den Angriff an dem zu pflegenden Boden (5) höheneinstellbare Abstützung (11/10, 42/41) vorgesehen ist.

12. Pflegegerät nach Anspruch 11,
**dadurch gekennzeichnet,**
daß die Abstützung (41/42) eine an dem Boden (5) abrollende Walze (41) aufweist, die sich vorzugsweise über einen Großteil der Breite des Pflegegerätes (1) erstreckt.

13. Pflegegerät nach Anspruch 12,
**dadurch gekennzeichnet,**
daß die Walze (41) mit einer selbstreinigenden Abstreifvorrichtung versehen ist, die an ihrer Mantelfläche angreift.

14. Pflegegerät nach einem der Ansprüche 1 bis 13,
**dadurch gekennzeichnet,**
daß ein das Pflegeaggregat (15) aufnehmendes Gehäuse, insbesondere Kehrkopf (13), im Bereich der Baueinheit (40) wenigstens einseitig mit einer Ausnehmung zur seitlichen Entnahme der Baueinheit (40) versehen ist.

## Claims

1. Maintenance device (1) for the maintenance of substantially plane surfaces (5), preferably within the local, private or industrial domain, such as green areas, consolidated surfaces or the like, comprising a chassis (2) which can be coupled by means of a drawbar to a drawing vehicle having a power take-off shaft, for example a tractor or similar vehicle, said chassis (2) having at least one axle with at least two running wheels (4), a receiving container (12) fixed to the chassis (2) for receiving material collected from the surface (5) to be treated, such as for example parts of plants cut by mowing, swept-up dirt particles such as leaves, garbage, sand, gravel or the like, and a maintenance aggregate (15) arranged on the chassis (2) which includes at least one maintenance tool (16; 17, 18, 19) driven for rotation, such as a flail type mower (19), a sweeper roll (17) and/or a soil aerator roll (18) or the like, characterized in that the maintenance tool (16; 17, 18, 19) has a frame (14) or similar member which can be coupled to or uncoupled from the chassis (2) in such a manner that the modular unit (40) thus formed can be removed from or slidingly inserted in the chassis (2), independently of other equipment, and that said modular unit (40) is supported on the chassis (2) for installation and removal in an approximately horizontal direction laterally with respect to the travelling direction.

2. Maintenance device according to claim 1, characterized in that the maintenance tool (16; 17, 18, 19) has an associated transport roll (23), preferably in the form of a brush driven for rotation and arranged between the maintenance tool (16; 17, 18, 19) and the receiving container (12).

3. Maintenance device according to claim 2, characterized in that the maintenance tool (16; 17, 18, 19) and the transport roll (23) are driven by means of a driving apparatus (8, 9) which can be driven by the drawing vehicle through the PTO-shaft.

4. Maintenance device according to claim 3, characterized in that both the maintenance tool (16; 17, 18, 19), the transport roll (23) and the driving apparatus (8, 9) are equipped with pulleys (9, 21, 27) which are interconnected through at least one driving belt (22, 28), the rotational speed of the maintenance tool (16; 17, 18, 19) and the transport roll (23) being adjustable by means of pulleys (21, 27) correspondingly dimensioned in proportion to the pulley (9) of the driving apparatus (8, 9).

5. Maintenance device according to claim 3 or 4, characterized in that the driving apparatus (8, 9) is rigidly connected to the chassis (2).

6. Maintenance device according to one of the claims 2 to 5, characterized in that the support of the maintenance tool (16; 17, 18, 19) within the frame (14) is formed to be displaceable, so that the coordination in space of the maintenance tool (16; 17, 18, 19) and the transport roll (23) with respect to each other can be changed.

7. Maintenance device according to one of the claims 2 to 6, characterized in that the frame (14) with the maintenance tool (16; 16, 18, 19) and the transport roll (23) form a sweeper head (13) which is supported for pivoting about a center of gravity.

8. Maintenance device according to claim 7, characterized in that the center of gravity is behind the running wheels (4) in the travel direction of working.

9. Maintenance device according to one of the claims 1 to 8, characterized in that the chassis (2) includes longitudinal bars (3) which are formed - preferably with an U-shaped cross section - in a manner such as to allow for a limited torsion.

10. Maintenance device according to one of the claims 1 to 9, characterized in that all the input respectively output members (9, 22, 21), from the transmission (8) up to the maintenance tools (16; 17, 18, 19), are arranged on the same side of the chassis (2) respectively the frame (14).

11. Maintenance device according to one of the claims 1 to 10, characterized in that on the chassis (2), near the maintenance tool (16; 17, 18, 19), a height-adjustable support (11/10, 42/41) is provided for contact with the ground (5) to be maintained.

12. Maintenance device according to claim 11, characterized in that the support (41/42) includes a roll (41) rolling off against the ground (5), which roll preferably extends over a major part of the width of the maintenance device (1).

13. Maintenance device according to claim 12, characterized in that the roll (41) is provided with a self-cleaning scraper means acting upon the surface area of the roll.

14. Maintenance device according to one of the claims 1 to 13, characterized in that a housing which accommodates the maintenance aggregate (15), particularly sweeper head (13), is provided in the zone of the modular unit (40) with a recess at least on one side, for the lateral removal of said modular unit (40).

## Revendications

1. Dispositif d'entretien (1) pour l'entretien de surfaces sensiblement planes (5), de préférence dans le domaine communal, privé ou industriel, de telles que terrains gazonnés, consolidés ou terrains analogues, ledit dispositif comportant un châssis (2) qui peut, par l'intermédiaire d'un timon, être attelé à un véhicule tracteur à un arbre de prise de force, par exemple un tracteur ou un véhicule analogue, ledit châssis (2) ayant au moins un essieu avec au moins deux roues mobiles (4), une benne collectrice (12), fixée sur le châssis (2), pour des matières ramassées de la surface à entretenir (5), de telles que parties végétales coupées, saleté récupérée par balayage, donc des feuilles, des déchets, de sable, de gravillon et des déchets analogues, et un agrégat d'entretien (15) prévu sur le châssis (2) et muni d'au moins un outil d'entretien entraîné en rotation (16; 17, 18, 19), de tel qu'une faucheuse à fléaux (19), un rouleau de balayage (17) et/ou un rouleau aérateur de sol ou un outil analogue, caractérisé en ce que l'outil d'entretien (16; 17, 18, 19) comporte un cadre (14) ou un élément analogue qui peut être attelé au châssis (2) ou en dételé, de sorte que l'ensemble modulaire (40) si formé peut, d'une façon indépendante d'autres équipements, être enlevé du châssis (2) ou y introduit en glissant, et que l'ensemble modulaire (40) est supporté sur le châssis (2) de sorte qu'il peut être monté et démonté en la direction à peu près horizontale latéralement par rapport au sens de marche.

2. Dispositif d'entretien selon la revendication 1, caractérisé en ce qu'est associé à l'outil d'entretien (16; 17, 18, 19) un rouleau de transport (23), de préférence sous la forme d'une brosse entraînée en rotation et disposée entre l'outil d'entretien (16; 17, 18, 19) et la benne collectrice (12).

3. Dispositif d'entretien selon la revendication 2, caractérisé en ce que l'outil d'entretien (16; 17, 18, 19) et le rouleau de transport (23) sont entraînés par l'intermédiaire d'un dispositif d'entraînement (8, 9) qui peut, au moyen de l'arbre de prise de force, être entraîné par le véhicule tracteur.

4. Dispositif d'entretien selon la revendication 3, caractérisé en ce que non seulement l'outil d'entretien (16; 17, 18, 19) et le rouleau de transport (23) mais aussi le dispositif d'entraînement (8, 9) ont des poulies (9, 21, 27) qui sont reliées l'une avec l'autre par l'intermédiaire d'au moins une courroie d'entraînement (22, 28), la vitesse de rotation de l'outil d'entretien (16 ; 17, 18, 19) et du rouleau de transport (23) étant réglable au moyen de poulies (21, 27) qui sont conformément dimensionnées par rapport à la poulie (9) du dispositif d'entraînement.

5. Dispositif d'entretien selon la revendication 3 ou 4, caractérisé en ce que le dispositif d'entraînement (8, 9) est relié fixe au châssis (2).

6. Dispositif d'entretien selon l'une des revendications 2 à 5, caractérisé en ce que le logement de l'outil d'entretien (16; 17, 18, 19) dans le cadre (14) est d'une façon déplaçable, de sorte que la coordination dans l'espace de l'outil d'entretien (16 ; 17, 18, 19) par rapport au rouleau de transport (23) peut être altérée.

7. Dispositif d'entretien selon l'une des revendications 2 à 6, caractérisé en ce que le cadre (14) avec l'outil d'entretien (16; 17, 18, 19) et le rouleau de transport (23) forment une tête de balayage (13) qui est logée d'une manière pivotante autour d'un centre de gravité.

8. Dispositif d'entretien selon la revendication 7, caractérisé en ce que le centre de gravité se trouve, en le sens du marche de travail, en arrière des roues mobiles (4).

9. Dispositif d'entretien selon l'une des revendications 1 à 8, caractérisé en ce que le châssis (2) comporte des longerons (3) qui sont formés - de préférence sous forme de section en U - de telle manière qu'ils permettent une torsion limitée.

10. Dispositif d'entretien selon l'une des revendications 1 à 9, caractérisé en ce que tous les organes moteurs respectivement de sortie (9, 22, 21), de la boîte de vitesse (8) jusqu'aux outils d'entretien (16; 17, 18, 19), sont arrangés au même côté du châssis (2) respectivement du cadre (14).

11. Dispositif d'entretien selon l'une des revendications 1 à 10, caractérisé en ce qu'est prévu sur le châssis (2), près de l'outil d'entretien (16; 17, 18, 19), un support (11/10, 42/41) réglable en hauteur pour l'attaque sur le sol (5) à entretenir.

12. Dispositif d'entretien selon la revendication 11, caractérisé en ce que le support (41/42) comporte un rouleau (41) se déroulant sur le sol (5), ledit rouleau s'étendant de préférence sur la majeure partie de la largeur du dispositif d'entretien (1).

13. Dispositif d'entretien selon la revendication 12, caractérisé en ce que le rouleau (41) est muni d'un appareil stripeur autonettoyant qui s'attaque à la surface de l'enveloppe du rouleau.

14. Dispositif d'entretien selon l'une des revendications 1 à 13, caractérisé en ce qu'une boîte recevant l'agrégat d'entretien (15), en particulier tête de balayage, est, dans la zone de l'ensemble modulaire (40), muni au moins sur un côté d'un creux servant au prélèvement de l'ensemble modulaire (40).
